(19) Europäisches Patentamt
European Patent Office
Office européen des brevets

(11) **EP 2 853 752 B1**

(12) **EUROPÄISCHE PATENTSCHRIFT**

(45) Veröffentlichungstag und Bekanntmachung des Hinweises auf die Patenterteilung:
**10.03.2021   Patentblatt 2021/10**

(51) Int Cl.:
***F15B 11/05*** *(2006.01)*

(21) Anmeldenummer: **14002132.0**

(22) Anmeldetag: **21.06.2014**

(54) **Regelungssystem**

Control system

Système de régulation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2013   DE 102013012332**

(43) Veröffentlichungstag der Anmeldung:
**01.04.2015   Patentblatt 2015/14**

(73) Patentinhaber: **Hydac Fluidtechnik GmbH**
**66280 Sulzbach/Saar (DE)**

(72) Erfinder:
• **Piechnick, Martin**
  **97816 Lohr am Main (DE)**
• **Friebe, Ferdinand**
  **66111 Saarbrücken (DE)**

(74) Vertreter: **Bartels und Partner, Patentanwälte**
**Lange Strasse 51**
**70174 Stuttgart (DE)**

(56) Entgegenhaltungen:
DE-A1- 3 909 693        DE-A1- 10 257 411
US-A1- 2009 145 120

• **ZAHE B ET AL: "LOAD SENSING ALD MEHRGRASSENREGELUNG", O + P OLHYDRAULIK UND PNEUMATIK, VEREINIGTE FACHVERLAGE, MAINZ, DE, Bd. 37, Nr. 8, 1. August 1993 (1993-08-01) , Seiten 638-644, XP000413162, ISSN: 0341-2660**

**EP 2 853 752 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Regelungssystem, insbesondere zur Drehzahl- oder Positionsregelung von fluidischen Verbrauchern wie hydraulischen Motoren bzw. Stellantrieben, mit den Merkmalen im Oberbegriff von Anspruch 1.

Eine Drehzahl- oder Positionsregelung von hydraulischen Antrieben über eine sogenannte Zwei-Wege-Volumenstromregelung ist Stand der Technik. Insbesondere werden solche volumenstromgeregelte Systeme für mobile Arbeitsmaschinen verwendet, wenn die Drehzahl eines hydraulischen Motors oder die Lineargeschwindigkeit eines dort eingesetzten Hydraulik-Arbeitszylinders von der Fluid-Zulaufseite her lastunabhängig geregelt werden soll.

Die Regelung eines Volumenstromes, der von einer Volumenstromquelle, wie z.B. einer Load-Sensing-Versorgung regelmäßig ausgeführt in Form einer Load-Sensing-Pumpe oder einer Konstantpumpe mit Neutralumlauf-Druckwaage, bereitgestellt wird, setzt üblicherweise Stromregelventile voraus. Diese werden grundsätzlich unterteilt in Zwei- und Drei-Wege-Stromregler. In ihnen ist jeweils ein Drosselventil mit einem Druckdifferenzventil (Sekundär- oder auch Individual-Druckwaage) in Reihen- bzw. Parallelschaltung kombiniert. Die einstellbare Drossel wird als Passiv- oder Messblende und die veränderliche Drossel des Druckdifferenzventils als Regelblende bezeichnet. Die genannte Regelblende des Stromreglers hält dabei die Druckdifferenz über die einstellbare Messblende stets konstant. Dies geschieht über ein Kräftegleichgewicht, bestehend aus Druck und Kolbenfläche auf der einen Seite und Druck, Kolbenfläche und Federkraft auf der anderen Seite der bekannten Anordnung. Diese konstante Druckdifferenz lässt nach dem Strömungsverhalten an turbulenten Widerständen einen konstanten Volumenstrom fließen. Die Messblende dient in Drehzahl- oder Positionsregelkreisen als Stellglied und wird von einem Regelmodul, welches die Ist-Drehzahl bzw. Position erfasst, angesteuert. Die hydraulische Regelblende übernimmt im Fall wechselnder Lasten den größten Teil der Volumenstromregelung. Das Regelmodul hat die Aufgabe, die genaue Position bzw. Drehzahl zu regeln. Grundsätzlich kann man betreffend sogenannte Load-Sensing-Systeme (LS-Systeme) festhalten, dass die Umlauf-druckwaage bzw. die LS-Versorgung stets den höchsten benötigten Lastdruck in einer Verbraucherschaltung mit mehreren hydraulischen Verbrauchern zur Verfügung stellt. Die Sekundärdruckwaagen werden dabei für die Lastunabhängigkeit jedes einzelnen Verbrauchers benötigt.

Der Vorteil dieser weit verbreiteten Technik liegt in der viskositäts- und belastungsunabhängigen Steuerung eines Volumenstroms durch die konstante Druckdifferenz über dem Drosselquerschnitt. Ein weiterer Vorteil ist, dass die Regelung über die hydraulische Druckwaage extrem schnell ist. Diese Schnelligkeit ist z.B. für drehzahlgeregelte Hydraulikmotoren, welche keine Belastung erfahren, unabdingbar. Ohne Belastung der Motoren lassen sie sich nur über einen entsprechenden Gegendruck bremsen.

Ein signifikanter Nachteil für dahingehende LS-Systeme ergibt sich durch die Schwingungsanregung von schwach gedämpften Verbrauchern durch die Druckwaage. Verbraucher sind durch reine Drosselsteuerungen prinzipiell nicht schwingungsfähig. Durch die hydraulische Mitkoppelung, bedingt durch die in den hydraulischen Versorgungskreis geschalteten Druckwaagen, entsteht jedoch ein schwingungsfähiges Feder-Masse-System, und der Verbraucher kann zur Schwingung angeregt werden. Die angesprochenen Schwingungen entstehen generell durch die Sekundär- als auch durch die Umlaufdruckwaage oder das LS-Versorgungssystem, bei Veränderung der Last oder bei Veränderung der Drehzahl/Position der Verbraucher.

Die DE 102 57 411 A1 beschreibt ein Regelungssystem, insbesondere zur Drehzahl- oder Positionsregelung von fluidischen Verbrauchern wie hydraulischen Motoren bzw. Stellantrieben, die von der Fluid-Zulaufseite her mittels Einstellen eines Drosselquerschnittes eines Steuerventils, vorzugsweise in Form eines Drosselventils, lastunabhängig zu regeln sind, bestehend aus mindestens einer elektronischen Druckwaage und mindestens einer Lastdruckrückführung, wobei die elektronische Druckwaage den Druck in Fluidströmungsrichtung gesehen vor und hinter dem Steuerventil aufnimmt und unter Einbezug einer Durchflusskennlinienbestimmung über einen fluidischen Widerstand den Drosselquerschnitt derart einstellt, dass über diesen stets ein annähernd konstanter Volumenstrom fließt, wobei die Lastdruckrückführung der aktiven Schwingungsdämpfung dient, indem der lastseitige Druck mit seinem Schwingungsfrequenzband gefiltert ist.

Weitere Regelungssysteme gehen aus der DE 39 09 693 A1 und der US 2009/0145120 A1 hervor.

Ausgehend von dem vorstehend genannten Stand der Technik liegt der Erfindung die Aufgabe zugrunde, die bekannten Regelungssysteme unter Beibehalten ihrer Vorteile wie Lastunabhängigkeit und Schnelligkeit der Einregelvorgänge dahingehend weiter zu verbessern, dass die angesprochene Schwingungsverursachung drastisch reduziert ist.

Eine dahingehende Aufgabe löst ein Regelungssystem mit den Merkmalen des Patentanspruches 1 in seiner Gesamtheit.

Gemäß dem Kennzeichen von Anspruch 1 ist vorgesehen, dass das Schwingungsfrequenzband derart hochpassgefiltert ist, dass nur die hohen gefilterten Frequenzen Einfluss auf die Einstellung des Steuerventils nehmen und die tiefen Frequenzen passieren einen Totzeit- oder Verzögerungsblock mit einem PT1-Verhalten, die an einem Summationspunkt von dem eigentlichen Lastdrucksignal subtrahiert werden; und dass unter Bildung des Ventilöffnungssignals für das Steuerventil der Steuerausgang der Lastdruckrückführung vom Stellsignal der elektronischen Druckwaage subtrahiert ist.

Dadurch, dass das Regelungssystem aus

- mindestens einer elektronischen Druckwaage und

- mindestens einer Lastdruckrückführung

besteht, lässt sich eine Art Regelalgorithmus generieren, welcher einen Drosselquerschnitt am Steuerventil, vorzugsweise in Form des Drosselventils, einstellt. Als Eingangssignal erhält dabei der angesprochene Regelalgorithmus ebenso die Drucksignale wie bei der hydraulischen Druckwaage auch, auf die man bei der Realisierung des erfindungsgemäßen Regelungssystems vollständig verzichten kann. Vielmehr wird die Funktion der bekannten Druckwaagen ausschließlich regelungstechnisch gelöst, ohne jedoch auf die systembedingten Vorteile der hydraulischen Druckwaage wie Lastunabhängigkeit und Schnelligkeit der Regelung verzichten zu müssen. Zusätzlich wird bei der erfindungsgemäßen Regelungssystemlösung der Soll- und Ist-Wert des Verbrauchers (Drehzahl/Position) als Eingang für den Regelalgorithmus genutzt. Der Ausgang des Regelungssystems mit dem angesprochenen Regelalgorithmus ergibt dann das Stellsignal für das Steuer- oder Drosselventil.

Der angesprochene Regelalgorithmus des Regelungssystems besteht dabei aus grundsätzlich drei Elementen:

1. Elektronische Druckwaage

Die elektronische Druckwaage nimmt den Druck vor und nach dem Steuer- oder Drosselventil auf und stellt gemäß einer Durchflusskennlinienberechnung über einen hydraulischen Widerstand den Drosselquerschnitt derart ein, dass über diesen stets ein annähernd konstanter Volumenstrom fließt.

2. Nachgebende Lastdruckrückführung zur aktiven Schwingungsdämpfung

Die Schwingungen des Drucksignals werden gedämpft. Dazu wird der lastseitige Druck gefiltert. So wird das Schwingungsfrequenzband hochpassgefiltert, so dass nur die hohen Frequenzen auf die Ventileinstellung wirken können. Die tiefen Schwingungsfrequenzen passieren den Totzeit- oder Verzögerungsblock mit einem sogenannten PT1-Verhalten. Die hohen Frequenzen werden gefiltert. Am Summationspunkt wird dann das Lastdrucksignal um die Tiefenfrequenzen subtrahiert. Dieses Signal wird nochmals vom Stellsignal auf das Drosselventil subtrahiert.

3. Überlagerte Drehzahlregelung

Um letztendlich die Sollwerte am Verbraucher zu erzielen, wird ein Drehzahlregelkreis mit PI-Regelverhalten der elektronischen Druckwaage überlagert.

Gute Resultate werden erreicht, wenn man die elektronische Druckwaage mit der nachgebenden Lastdruckrückführung miteinander kombiniert; optimale Ergebnisse sind jedoch nur erreichbar, sofern man alle drei Elemente für das erfindungsgemäße Regelungssystem miteinbezieht.

Weitere vorteilhafte Ausführungsformen des erfindungsgemäßen Regelungssystems sind Gegenstand der Unteransprüche. Insbesondere ist das erfindungsgemäße Regelungssystem dazu geeignet, als Ersatz für ein übliches 2-Wege-Stromregelventil mit einer Mess- und einer Regelblende und/oder einem LS-Versorgungssystem zu dienen, das unter Einsatz von Sekundärdruckwaagen für die Lastunabhängigkeit jedes einzelnen fluidischen Verbrauchers stets den höchsten benötigten Lastdruck für einen der Verbraucher zur Verfügung stellt.

Da das erfindungsgemäße Regelungssystem ausschließlich mit elektronischen Regelbaukomponenten auskommt und insoweit auf eine komplizierte Ventiltechnik, wie sie regelmäßig bei Sekundärdruckwaagen zum Einsatz kommt, verzichten kann, ist das Regelungssystem kostengünstig in der Realisierung und entsprechend aufgrund seiner elektronischen Baukomponenten funktionssicher im Betrieb.

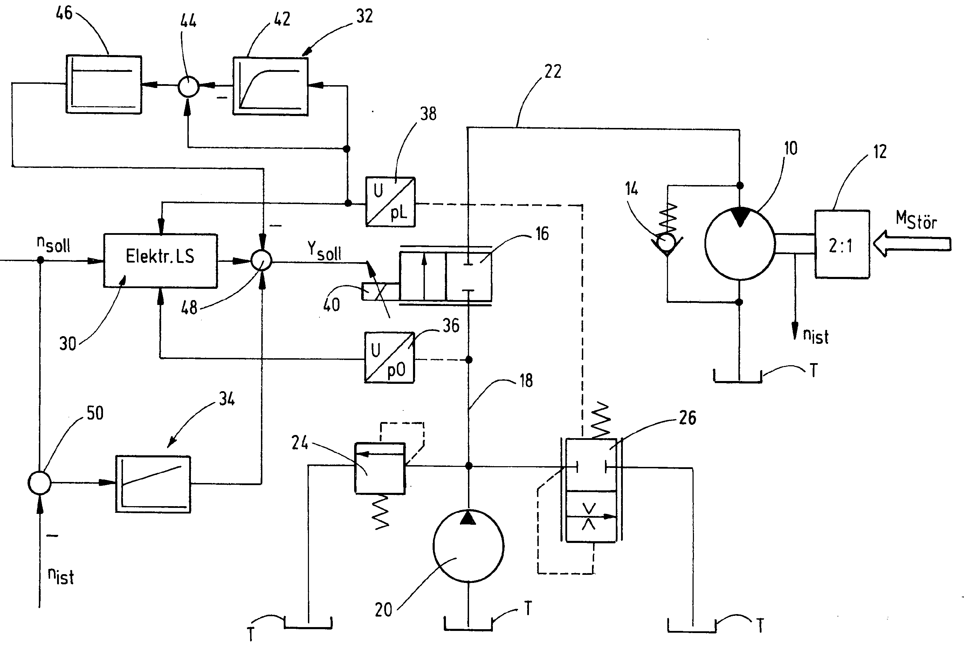

Die einzige Figur zeigt anhand einer Schaltplandarstellung das erfindungsgemäße Regelungssystem mit seinen einzelnen Elementen des sogenannten Regelalgorithmus.

Gemäß der Schaltplandarstellung nach der einzigen Figur dient das dort gezeigte Regelungssystem zur Drehzahlregelung eines fluidischen Ver brauchers, hier in Form eines hydraulischen Motors 10. Der hydraulische Motor 10 treibt über ein Getriebe 12 mit einer Übersetzung von 2:1 eine nicht näher dargestellte Antriebseinrichtung an, beispielsweise in Form eines Fahrantriebes, bei dessen Betrieb Störmomente $M_{stör}$ auf den Hydro motor 10 rückeinwirken können. Ferner ist die Ist-Drehzahl $n_{Ist}$ über eine entsprechende Sensorik für den Hydromotor 10 erfassbar. Als besonders vorteilhaft hat sich die erfindungsgemäße Lösung jedoch für Hydromotoren erwiesen, die sogenannte Düngerstreuer-Wurfscheiben antreiben.

Anstelle des gezeigten Hydromotors 10 kann auch ein anderer fluidischer Verbraucher treten wie beispielsweise ein hydraulischer Stellantrieb in Form eines üblichen hydraulischen Arbeitszylinders (nicht dargestellt). Anstelle der aktuellen Drehzahlerfassung $n_{Ist}$ hat dann ein entsprechender Positions- oder Lagesensor für das Einspeisen in die elektronische Regelung die Ist-Position zu ermitteln. Mit der Maßgabe, anstelle der aktuellen Ist-Drehzahl und einer Drehzahlvorgabe die Ist-Position des hydraulischen Aktuators zu erfassen sowie dessen Sollposition, lässt sich die Regelung ohne weitere inhaltliche Änderungen gleichfalls für solche Aufgabenstellungen einsetzen. Der Hydromotor 10 ist ausgangsseitig an einen Tank T angeschlossen und weist parallel zu seiner Durchflussrichtung ein federbelastetes Rückschlagventil 14 auf, dessen Schließstellung in Richtung des Tanks T weist.

Des Weiteren weist die Schaltung nach der Figur ein Steuerventil 16 auf in der Art eines Proportional-Drosselventils. Das Steuerventil 16 ist eingangsseitig an eine Fluidzulaufseite 18 angeschlossen, die von einer hydraulischen Versorgungsquelle mit Fluid vorgebbaren Druckes und Volumenmenge versorgbar ist, hier in Form einer Konstantpumpe 20, die ihr Fluid für den pumpenseitigen Fördereintrag in die Fluid-Zulaufseite 18 dem Tank T entnimmt.

In Blickrichtung auf die Figur gesehen ist linker Hand von der Hydropumpe 20 in den hydraulischen Versorgungskreis 22 ein Druckbegrenzungsventil 24 geschaltet, das ausgangsseitig wiederum auf die Tankseite T einmündet und das den Betriebsdruck im Versorgungskreis 22 beispielsweise auf einen Maximaldruck von 160 bar einschränkt. Demgegenüber ist in Blickrichtung auf die Figur gesehen auf der rechten Seite der Hydropumpe 20 eine Umlaufdruckwaage 26 üblicher Bauart in den Versorgungskreis 22 geschaltet, die auf ihrer Ausgangsseite gleichfalls wiederum an den Tank T angeschlossen ist und eingangsseitig den Ausgangsdruck an der Hydropumpe 20 erfährt. Die Steuerdrücke für die Umlaufdruckwaage 26 sind strichliniert dargestellt und auf der einen Seite steht als Steuerdruck der Konstantdruck der Hydropumpe 20 an und auf der anderen gegenüberliegenden Steuerseite der Fluiddruck, der auf der Ausgangsseite des Steuerventils herrscht, sowie ein vorgebbarer Federdruck einer Druckfeder.

Die Ausgangsseite des Steuerventils 16 versorgt über den Versorgungskreis 22 eingangsseitig den Hydromotor 10 mit Fluid vorgebbaren Druckes und vorgebbarem Volumen und treibt dergestalt den Hydromotor 10 an. Zur Regelung oder Ansteuerung des Steuerventils 16 sind gemäß dem Regelungssystem nach der Figur eine als Ganzes mit 30 bezeichnete elektronische Druckwaage vorgesehen sowie eine als Ganzes mit 32 bezeichnete Lastdruckrückführung und eine als Ganzes mit 34 bezeichnete Drehzahlregeleinrichtung.

Die angesprochene elektronische Druckwaage 30 (elektr. LS) nimmt mittels geeigneter Drucksensoren 36, 38 in der beschriebenen Fluidströmungsrichtung gesehen vor und hinter dem Steuerventil 16 den jeweils herrschenden Druck in kontinuierlicher Weise auf. Der jeweils herrschende Druck auf der Zulaufseite 18 wird dabei mit $p_0$ bezeichnet und der zum Hydromotor 10 führende Ausgangsdruck des Steuerventils 16 ist mit $p_L$ bezeichnet. Unter Einbezug der Ventilkennlinie für das Steuerventil 16 und den erforderlichen Kenndaten für den Hydromotor 10 ergibt sich dann die Durchflusskennlinie des Wegeventils wie folgt:

$$Q_{Ventil,Soll} = \underbrace{f(y_{Ventil})}_{Ventilkennlinie} \cdot \sqrt{\frac{p_0 - p_L}{p_{Nenn}}} = V_{Motor} \cdot n_{Soll}$$

so dass sich eine erforderliche Ventilöffnung wie folgt ergibt:

$$y_{Ventil,Soll} = f^{-1}\left( V_{Motor} \cdot n_{Soll} \cdot \sqrt{\frac{p_{Nenn}}{p_0 - p_L}} \right)$$

Die Angabe $y_{Ventil,Soll}$ wird im Folgenden kurz mit $y_{Soll}$ wiedergegeben und ist insoweit auch in der Zeichnung dargestellt. Die dahingehende Sollgröße $y_{Soll}$ steuert dann auch über eine übliche elektromagnetische Betätigungseinrichtung 40 das Proportionaldrosselventil oder Steuerventil 16 an.

Der elektronischen Druckwaage 30 zugeschaltet ist die Lastdruckrückführung 32, die der aktiven Schwingungsdämpfung im hydraulischen Versorgungskreis 22 dient. Insbesondere soll der lastseitige Druck, also der Versorgungsdruck auf der Ausgangsseite des Steuerventils 16 mit seinem Schwingungsfrequenzband gefiltert werden. Hierfür ist die Lastdruckrückführung 32 an die Signalausgangsseite des Drucksensors 38 geschaltet und damit nur die hohen gefilterten Frequenzen Einfluss auf die Einstellung des Steuerventils 16 nehmen können, werden die tiefen Frequenzen mittels eines Totzeit- oder Verzögerungsblockes 42 mit einem sogenannten PT1-Verhalten herausgefiltert. Der Ausgang des dahingehenden Totzeit- oder Verzögerungsblockes 42 wird an einem Summationspunkt 44 der Lastdruckrückführung 32 abgezogen, die als weiterer Eingang unter Umgehung des Totzeit- oder Verzögerungsgliedes 42 als Eingangsgröße den Spannungsverlauf auf der Ausgangsseite des Drucksensors 38 erhält. Die am Summationspunkt 44 derart gebildete Differenzgröße wird dann eingangsseitig auf einen Verstärker 46 der Lastdruckrückführung 32 geleitet und ausgangseitig ist der Verstärker 46 an einen weiteren Summationspunkt 48 angeschlossen, wobei die jeweilige Ausgangsgröße der Lastdruckrückführung 32 am Summationspunkt 48 abgezogen wird, was mit einem Minus-Symbol dargestellt ist. Mit der dahingehenden Anordnung der Lastdruckrückführung 32 ist jedenfalls das Schwingungsfrequenzband derart hochpassgefiltert, dass nur die hohen gefilterten Frequenzen Einfluss auf die Einstellung des Steuerventils 16 nehmen, wobei die Ausgangsgröße des weiteren Summationspunktes 48 die Eingangssteuergröße für die jeweils erforderliche Ventilöffnung $y_{Soll}$ erzeugt.

Zusätzlich zu den bisher beschriebenen Regelungseinheiten elektronische Druckwaage 30 und Lastdruckrückführung 32 weist das Regelungssystem nach der Figur noch die Drehzahlregeleinrichtung 34 auf. Diese weist für eine Sollwertvorgabe am Verbraucher in Form des Hydromotors 10 ein sogenanntes PI-Regelungsverhalten auf, die als weitere Eingangsgröße am weiteren Summationspunkt 48 anliegt. Auf der Eingangsseite des genannten Drehzahlreglers wird an einem dritten Summationspunkt 50 die über einen nicht näher dargestellten Sensor erfasste Ist-Drehzahl $n_{Ist}$ des Hydro-

motors 10 mit der Soll-Drehzahlvorgabe $n_{Soll}$ abgeglichen, die gleichfalls als Eingangsgröße für die elektronische Druckwaage 30 dient. Wie mit dem Minus-Zeichen in der Figur symbolisch angegeben, wird am dritten Summationspunkt 50 von der Soll-Drehzahl $n_{Soll}$ die Ist-Drehzahl $n_{Ist}$ abgezogen und als Eingangsgröße auf den Drehzahlregler 34 gegeben.

Grundsätzlich besteht auch die Möglichkeit, sofern keine hochgenaue Regelung erwünscht ist, dass man die Drehzahlregeleinrichtung 34 entfallen lässt. Auch in diesem Fall bekommt dann die elektronische Druckwaage 30 auf der Eingangsseite als Solldrehzahl den Wert $n_{Soll}$ als elektronische Vorgabegröße eingespeist.

Das vorstehend beschriebene Regelungskonzept reagiert in etwa ähnlich mit einer Schaltung nach dem vorstehend beschriebenen Stand der Technik (Stromregelventil mit Drehzahl-/Positionsregelkreis), d. h. die Drehzahl und der Lastdruck schwingen in ähnlicher Zeit mit ähnlicher Überschwinghöhe nach plötzlichen Belastungssprüngen wieder auf den Sollwert zurück. Das neue erfinderische Regelungssystem hat gegenüber der konventionellen Regelung aber die deutliche Verbesserung einer schnelleren Sprungantwort bei Beschleunigen des jeweiligen Verbrauchers ohne Last. Ferner ergeben sich deutlich reduzierte Dauerschwingungen am jeweiligen Verbraucher im Druck- und Drehzahlsignal im stationären Zustand (T> 1 s). Auf zusätzliche Druckwaagenventile kann verzichtet werden; jedoch werden zwei Drucksensoren 36, 38 für die jeweilige Druckwerterfassung vor und hinter dem Steuerventil 16 benötigt.

Wie bereits dargetan, braucht die Erfindung nicht auf hydraulische Rotationsantriebe 10 beschränkt zu sein, sondern kann auch dort eingesetzt werden, wo ein sonstiger hydraulischer Antrieb, beispielsweise in Form eines hydraulischen Stellantriebes, üblicherweise mit einem Stromregelventil eingestellt wird.

**Patentansprüche**

1. Regelungssystem mit einem Steuerventil (16), wobei das Regelungssystem insbesondere zur Drehzahl- oder Positionsregelung von fluidischen Verbrauchern wie hydraulischen Motoren (10) bzw. Stellantrieben vorgesehen ist, die von der Fluid-Zulaufseite (18) her mittels Einstellen eines Drosselquerschnittes des Steuerventils (16), vorzugsweise in Form eines Drosselventils, lastunabhängig zu regeln sind, umfassend

   - mindestens eine elektronischen Druckwaage (30) und
   - mindestens eine Lastdruckrückführung (32),

   wobei die elektronische Druckwaage (30) den Druck in Fluidströmungsrichtung gesehen vor (po) und hinter ($p_L$) dem Steuerventil (16) aufnimmt und unter Einbezug einer Durchflusskennlinienbestimmung ($Q_{Ventil,Soll}$) über einen fluidischen Widerstand den Drosselquerschnitt derart einstellt, dass über diesen stets ein annähernd konstanter Volumenstrom fließt, wobei die Lastdruckrückführung (32) der aktiven Schwingungsdämpfung dient, indem der lastseitige Druck mit seinem Schwingungsfrequenzband gefiltert ist,

   **dadurch gekennzeichnet,**

   **dass** das Schwingungsfrequenzband derart hochpassgefiltert ist, dass nur die hohen gefilterten Frequenzen Einfluss auf die Einstellung des Steuerventils (16) nehmen und die tiefen Frequenzen passieren einen Totzeit- oder Verzögerungsblock (42) mit einem PT1-Verhalten, die an einem Summationspunkt (44) von dem eigentlichen Lastdrucksignal subtrahiert werden; und

   **dass** unter Bildung des Ventilöffnungssignals $Y_{Soll}$ für das Steuerventil (16) der Steuerausgang der Lastdruckrückführung (32) vom Stellsignal der elektronischen Druckwaage (30) subtrahiert ist.

2. Regelungssystem nach Anspruch 1, **dadurch gekennzeichnet, dass** eine Drehzahl- (34) oder Positionsregeleinrichtung für die Sollwertvorgabe am jeweiligen Verbraucher ein PI-Verhalten aufweist, die als Eingangsgröße für die elektronische Druckwaage (30) dient.

3. Regelungssystem nach Anspruch 2, **dadurch gekennzeichnet, dass** alle Ausgänge von elektronischer Druckwaage (30), Lastdruckrückführung (32) sowie der Drehzahl- (34) oder Positionsregelung in dem einen Summationspunkt (48) zusammengefasst sind, an den ausgangsseitig die elektronisch ansteuerbare Betätigungseinrichtung (40) für das Steuerventil (16) angeschlossen ist.

4. Regelungssystem nach einem der vorstehenden Ansprüche, **dadurch gekennzeichnet, dass** ein fluidischer Versorgungskreis (22) vorhanden ist mit einer Druckversorgungsquelle, insbesondere in Form einer Hydropumpe (20), die ausgangsseitig an eine Umlauf-Druckwaage (26) angeschlossen ist, und dass zwischen der Druckversorgungsquelle (20) und dem jeweiligen fluidischen Verbraucher, insbesondere in Form eines Hydromotors (10) das Regelungssystem in den fluidischen Versorgungskreis (22) geschaltet ist.

5. Regelungssystem nach einem der vorstehenden Ansprüche, **dadurch gekennzeichnet, dass** anstelle der genannten Drosselquerschnittsstelle am Steuerventil (16) auch ein Blendenquerschnitt treten kann.

**Claims**

1. Control system with a control valve (16), wherein the control system is preferably provided to control the speed or position of fluid consumers such as hydraulic motors (10) or servomotors, which need to be controlled from the fluid supply side (18) by adjusting a throttle cross-section of the control valve (16), preferably in the form of a throttle valve, independent of load, comprising

   - at least one the electronic pressure compensator (30) and
   - at least one load pressure feedback (32), wherein the electronic pressure compensator (30) records the pressure, viewed in the fluid flow direction, before ($p_0$) and after ($p_L$) the control valve (16) and adjusts the throttle cross-section by incorporating a flow characteristic curve determination ($Q_{Ventil, soll}$) using a fluid resistance such that an approximately constant volume flow rate always flows through said throttle cross-section, wherein the load pressure feedback (32) is used to actively absorb vibrations by filtering the pressure on the load side with its vibration frequency band, **characterised**

   **in that** the vibration frequency band is high-pass filtered in such a way that only the high filtered frequencies influence adjustment of the control valve (16) and the low frequencies pass through a dead time or delay block (42) with PT1 behaviour, said frequencies being subtracted from the actual load pressure signal at a summation point (44); and

   **in that** the control output from the load pressure feedback (32) is subtracted from the control signal for the electronic pressure compensator (30) forming the valve opening signal $Y_{soll}$ for the control valve (16).

2. Control system according to claim 1, **characterised in that** a speed (34) or position control device for setpoint selection on the respective consumer displays PI behaviour that acts as an input variable for the electronic pressure compensator (30).

3. Control system according to claim 2, **characterised in that** all outputs from the electronic pressure compensator (30), load pressure feedback (32) and the speed (34) or position control are combined in the one summation point (48) to which the electronically controlled actuation device (40) for the control valve (16) is connected on the output side.

4. Control system according to any one of the preceding claims, **characterised in that** a fluid supply circuit (22) is provided with a pressure supply source, especially in the form of a hydraulic pump (20), which is connected to a circulation pressure compensator (26) on the output side, and **in that** the control system is wired into the fluid supply circuit (22) between the pressure supply source (20) and the respective fluid consumer, especially in the form of a hydraulic motor (10).

5. Control system according to any one of the preceding claims, **characterised in that** an orifice cross-section may also be used instead of the specified throttle cross-section point on the control valve (16).

**Revendications**

1. Système de régulation comprenant une vanne (16) pilote, le système de régulation étant prévu notamment pour la régulation en vitesse de rotation ou en position de consommateurs fluidiques, comme des moteurs (10) hydrauliques ou des servomoteurs, qui doivent être réglés, en fonction de la charge, du côté (18) de l'arrivée du fluide, en réglant une section transversale d'étranglement de la vanne (16) pilote, de préférence sous la forme d'une vanne à étranglement, comprenant

   - au moins une balance (30) manométrique électronique et
   - au moins un retour (32) de la pression de charge, la balance (30) manométrique électronique recevant, considéré dans le sens de passage du fluide, la pression avant (po) et après ($p_1$) la vanne (16) pilote, et avec incorporation d'une détermination ($Q_{Ventil, Soll}$) de la courbe caractéristique de débit, par l'intermédiaire d'une résistance fluidique, la section transversale d'étranglement de manière à ce qu'il passe par celle-ci toujours un courant en volume à peu près constant, le retour (32) de la pression de charge servant à l'amortissement actif des oscillations par le fait que la pression du côté de la charge est filtrée par sa bande de fréquence d'oscillation, **caractérisé**

   **en ce que** la bande de fréquence d'oscillation est filtrée passe-haut de manière à ce que seulement les fréquences hautes filtrées aient de l'influence sur le réglage de la vanne (16) pilote et de manière à ce que les fréquences basses passent dans un bloc (42) de temps mort ou de temporisation ayant un rapport PT1 qui, en un point (44) de sommation, sont soustraits du signal de pression de charge proprement dit ; et **en ce qu'**en formant le signal $Y_{Soll}$ d'ouverture de la vanne (16) pilote, la sortie de commande du retour (32) de pression de charge est soustraite du signal de réglage de la balance (30) manométrique électronique.

2. Système de régulation suivant la revendication 1, **caractérisé en ce qu'**un dispositif de régulation de la vitesse de rotation (34) ou de la position a, pour la prescription de valeurs de consigne au consommateur respectif, un comportement PI, qui sert de grandeur d'entrée à la balance (30) manométrique électronique.

3. Système de régulation suivant la revendication 2, **caractérisé en ce que** toutes les sorties de la balance (30) manométrique électronique du retour (32) de pression de charge ainsi que de la régulation de vitesse de rotation (34) ou de position sont rassemblées dans le un point (38) de sommation où, du côté de la sortie, est raccordé le dispositif (40) d'actionnement, pouvant être commandé électroniquement, de la vanne (16) pilote.

4. Système de régulation suivant l'une des revendications précédentes, **caractérisé en ce qu'**il y a un circuit (22) d'alimentation fluidique ayant une source d'alimentation sous pression, notamment sous la forme d'une pompe (20) hydraulique, qui est raccordée du côté de la sortie à une balance (26) manométrique de circulation, et **en ce que** le système de régulation est monté dans le circuit (20) d'alimentation fluidique entre la source (20) d'alimentation en pression et le consommateur fluidique respectif, notamment sous la forme d'un moteur (10) hydraulique.

5. Système de régulation suivant l'une des revendications précédentes, **caractérisé en ce qu'**au lieu du point de section transversale d'étranglement mentionné à la vanne (16) pilote, il peut y avoir aussi une section transversale à diaphragme.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10257411 A1
- DE 3909693 A1

- US 20090145120 A1